# EUROPÄISCHE PATENTSCHRIFT

(11) **EP 0 717 212 B1**
(45) Veröffentlichungstag und Bekanntmachung des Hinweises auf die Patenterteilung: **21.03.2001**
(21) Anmeldenummer: 95890208.2
(22) Anmeldetag: 16.11.1995
(51) Int. Cl.: F16D 23/06

(54) **Synchronisierungseinrichtung für Schaltgetriebe**
Synchronising device for gearbox
Synchronisateur de boîte de vitesse

(30) Priorität: 13.12.1994 AT 232194
(43) Veröffentlichungstag der Anmeldung: 19.06.1996
(73) Patentinhaber: HOERBIGER Antriebstechnik GmbH, 86956 Schongau (DE)
(72) Erfinder: Wagner, Dagobert, D-86932 Pürgen (DE)
(74) Vertreter: Pinter, Rudolf, Dipl.-Ing.

(56) Entgegenhaltungen:
- EP-A- 0 267 714
- EP-A- 0 453 167
- DE-A- 1 910 884
- DE-A- 3 609 879
- DE-A- 3 735 978
- GB-A- 1 125 946

## Beschreibung

Die Erfindung betrifft eine Synchronisierungseinrichtung für Schaltgetriebe, mit einem auf einer Getriebewelle drehfest angeordneten, im wesentlichen scheibenförmigen Synchronkörper, der auf seinem Außenumfang eine Schiebemuffe trägt, und wenigstens einem auf der Getriebewelle drehbar gelagerten Gangrad, welches über einen verbundenen Kupplungskörper mittels der Schiebemuffe mit dem Synchronkörper drehfest zusammenschaltbar ist, wobei der Kupplungskörper über einen damit formschlüssig in Verbindung stehenden, mit zumindest einer konischen Reibfläche versehenen Reibring und einen bei Betätigung der Schiebemuffe ein- und ausrückbaren, formschlüssig mit dem Synchronkörper in Verbindung stehenden Außensynchronring reibschlüssig mit dem Synchronkörper verbindbar ist, und wobei der Außensynchronring an seinem Außenumfang entsprechend der Sperrverzahnung von Schiebemuffe bzw. Kupplungskörper verzahnt ist und daran anschließend eine konische Reibfläche aufweist.

Eine derartige Einrichtung ist beispielsweise aus der EP-A1 508.976 bzw. auch der US-PS 5,135.087 bekannt und ermöglicht eine Erleichterung der Bedienung des Schaltgetriebes sowie eine Verringerung des Verschleisses. Nachteilig bei den bekannten Ausführungen ist allenfalls, daß die für ein einwandfreies Funktionieren der Einrichtung erforderliche Genauigkeit der Herstellung insbesonders der bei der Synchronisation reibschlüssig zusammenwirkenden Bauteile zumeist mehrere Arbeitsgänge erfordert, was derartige Synchronisierungseinrichtungen aus Kostengründen oft nicht zum Einsatz kommen läßt.

Aufgabe der vorliegenden Erfindung ist es, eine Synchronisierungseinrichtung der eingangs genannten Art so auszubilden, daß die angeführten Nachteile der bekannten Einrichtungen vermieden werden und daß insbesonders die Kosten für die Herstellung ohne Qualitätsverlust gesenkt werden können.

Diese Aufgabe wird gemäß der vorliegenden Erfindung bei einer Einrichtung der eingangs genannten Art dadurch gelöst, daß der Außensynchronring als tiefgezogener Blechteil ausgebildet ist, der an seinem Innenumfang im Bereich des tiefgezogenen Bodens zur formschlüssigen drehfesten Verbindung mit dem Synchronkörper ausgestanzte Mitnahmenocken aufweist, die in Ausnehmungen des Synchronkörpers eingreifen.

Die Probleme, die bisher der Anwendung des bekannten Tiefziehens im vorliegenden Zusammenhang insbesonders bei der Herstellung des Außensynchronringes entgegenstanden rührten daher, daß die erforderlichen Mitnehmer am Außensynchronring, die diesen mit dem Synchronkörper formschlüssig verbinden, ebenso wie die Verzahnung zur Zusammenwirkung mit der Sperrverzahnung von Schiebemuffe bzw. Kupplungskörper außen am Außensynchronring angeordnet waren, was zur Erzielung der erforderlichen Genauigkeit bei der Herstellung zusätzliche Arbeitsschritte erforderlich machte, die die an sich beispielsweise gegenüber der Spritzgußherstellung und nachträglichen Feinbearbeitung bestehenden Kostenvorteile des Tiefziehens wieder zunichte machten. So ist beispielsweise aus der DE-A1 3,519.811 ein Außensynchronring bekannt, bei dem die Mitnehmer zur Fixierung am Kupplungskörper aus Lappen gebildet sind, die am Außenumfang vorgesehen sind und bei der spanlosen Kaltverformung nur mit aufwendigen Zusatzschritten herstellbar sind. Ähnliche Schwierigkeiten gibt es auch bei der beispielsweise aus der DE-C2 3,519.810 bekannten Anordnung, bei der die Mitnehmer durch ein zusätzliches aufwendiges axiales Stauchverfahren ausgebildet werden. In beiden Fällen muß auch zusätzlich eine Kalibrierung vorgenommen werden, da die verwendeten Kaltverformungstechniken nicht die nötige Genauigkeit des Endproduktes liefern.

Bei der vorliegenden Erfindung wird nun ein anderer Weg gegangen - das eingesetzte Tiefziehverfahren ermöglicht ohne zusätzlichen Kalibrierungsvorgang eine hohe Maßgenauigkeit, wobei die nun im Bereich des tiefgezogenen Bodens des zur Herstellung des Außensynchronrings verformten Blechteils ausgestanzten Mitnahmenocken einerseits hohe mechanische Steifigkeit und andererseits auch nach dem Umformen die erforderliche Genauigkeit der Anordnung und Dimensionierung aufweisen. Es kann auf diese Weise mit sehr einfachen und kostengünstigen Mitteln bei der Herstellung des Außensynchronringes das Auslangen gefunden werden, was diesen wesentlichen Bauteil der Synchronisierungseinrichtung gegenüber den bisher bekannten derartigen Außensynchronringen wesentlich billiger und damit weitgehender einsetzbar macht.

Nach einer bevorzugten weiteren Ausgestaltung der Erfindung sind die Ausnehmungen des Synchronkörpers von sich in achsparalleler Richtung erstreckenden Umfangsnuten an der nach außen gerichteten Fläche einer seitlichen Ausdrehung des scheibenförmigen Synchronkörpers gebildet, welche zumindest Teile von Reibring und Außensynchronring aufnimmt. Dies ermöglicht eine einfache Herstellung auch des Synchronkörpers sowie eine einfache und platzsparende Gesamtanordnung der Synchronisierungseinrichtung.

Bei einer Synchronisierungseinrichtung mit einem zusätzlichen, mit der Innenseite des konischen Reibrings zusammenwirkenden Innensynchronring zur Doppelsynchronisierung ist in weiters bevorzugter Ausgestaltung der Erfindung vorgesehen, daß die Mitnahmenocken formschlüssig in Ausnehmungen des Innensynchronrings eingreifen, welcher damit über den Außensynchronring mit dem Synchronkörper gekoppelt ist. Damit ergibt sich - wie an sich ebenfalls aus der eingangs angesprochenen US-PS 5,135.087 bekannt - ein sehr einfacher Aufbau einer derartigen Doppel-Synchronisierungseinrichtung, wie sie insbesonders für höhere Schaltlasten bevorzugt zur Anwendung kommt.

Der Außensynchronring und/oder der Innensynchronring können nach einer anderen bevorzugten Weiterbildung der Erfindung auch an seiner bzw. ihrer mit dem Reibring zusammenwirkenden Seite einen Reibbelag aufweisen, womit die Einsatzmöglichkeiten weiter erhöht sind. Dieser Reibbelag kann in an sich bekannter Weise entweder vor der endgültigen Umformung des jeweiligen Synchronrings oder aber nachher aufgebracht werden, wozu bekannte Techniken verwendet werden können.

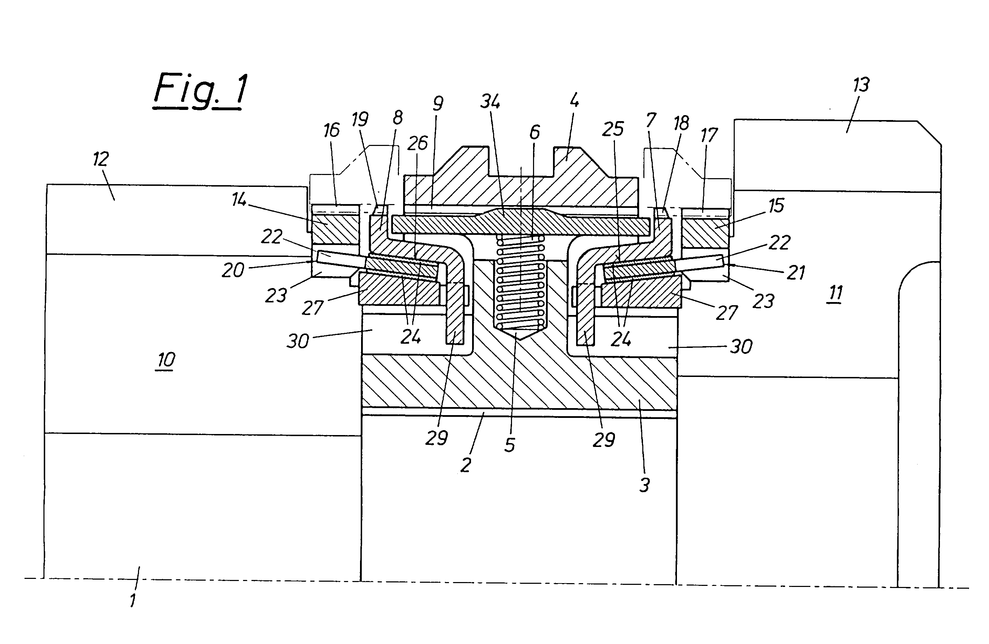

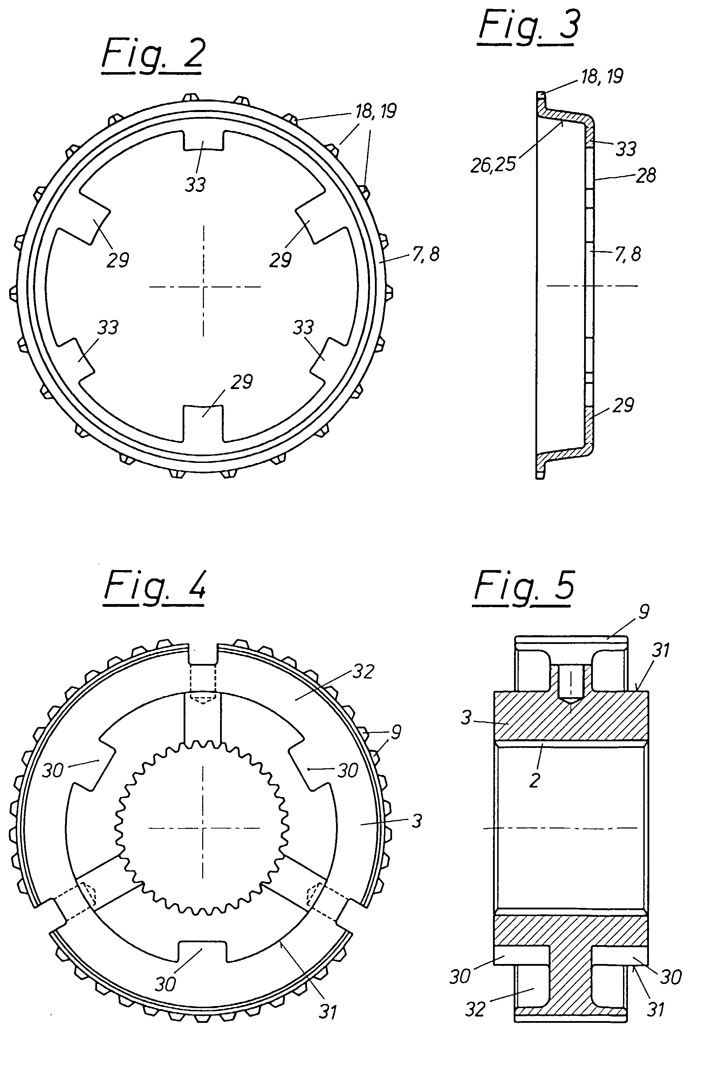

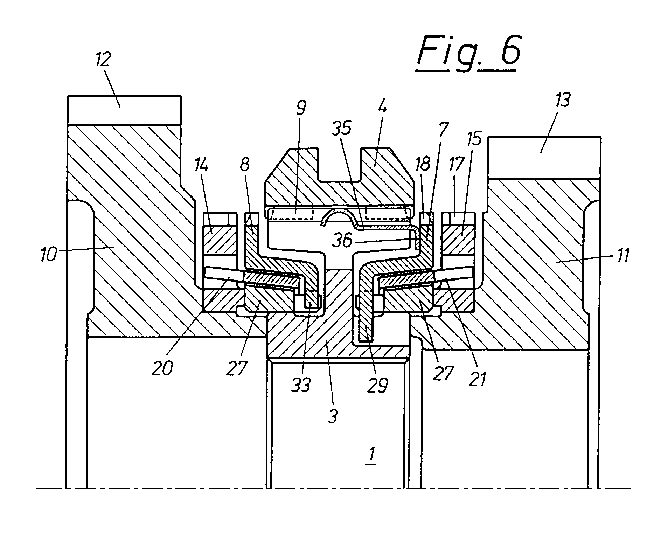

Die Erfindung wird im folgenden noch anhand der in der Zeichnung teilweise schematisch dargestellten Ausführungsbeispiele näher erläutert. Fig. 1 zeigt dabei einen Schnitt durch eine erfindungsgemäß ausgebildete Doppel-Synchronisierungseinrichtung, Fig. 2 und 3 zeigen den Außensynchronring aus Fig. 1 in Draufsicht bzw. Schnitt, Fig. 4 und 5 zeigen den zugehörigen Synchronkörper wiederum in Draufsicht und Schnitt, und Fig. 6 zeigt ein weiteres Ausführungsbeispiel der Erfindung in einer der Fig. 1 entsprechenden Darstellung.

Die Synchronisierungseinrichtung nach Fig. 1 weist einen auf einer Getriebewelle 1 mittels einer Verzahnung 2 drehfest angeordneten Synchronkörper 3 auf, welcher an seinem Außenumfang mit einer Schiebemuffe 4 versehen ist, in die ein hier nicht dargestellter Schalthebel eingreift und die mit einer aus einem Bolzen 5 und einer Feder 6 bestehenden Federsperre versehen ist. Weiters ist auf beiden Seiten des Synchronkörpers 3 je ein Außensynchronring 7, 8 angeordnet, der jeweils an seinem Außenumfang entsprechend einer inneren Sperrverzahnung 9 der Schiebemuffe 4 verzahnt ist. Auf der Getriebewelle 1 sind zu beiden Seiten des Synchronkörpers 3 Gangräder 10, 11 frei drehbar angeordnet, die an ihrem Außenumfang jeweils eine Verzahnung 12, 13 aufweisen. Mit jedem der Gangräder 10, 11 ist auf der dem Synchronkörper 3 zugewandten Seite ein ringförmiger Kupplungskörper 14, 15 drehfest verbunden der jeweils mit einer Außenverzahnung 16, 17 versehen ist, die bei entsprechender Verschiebung der Schiebemuffe 4 in die strichpunktiert eingezeichneten Lagen ebenso wie die Außenverzahnungen 18, 19 der Außensynchronringe 7, 8 mit der inneren Sperrverzahnung 9 der Schiebemuffe 4 zusammenwirkt.

Die beiden Kupplungskörper 14, 15 sitzen drehfest form- oder kraftschlüssig (z.B. Verzahnung, Laserschweißung u.s.w.) auf je einem entsprechenden Ansatz der Gangräder 10, 11 und stehen mit dem Synchronkörper 3 über je eine bedarfsweise ein- bzw. ausrückbare Reibungskupplung in Verbindung. Diese weist je einen Reibring 20, 21 auf, der einen eigenen Bauteil bildet und mit an seiner im Durchmesser größeren Seite vorragenden Mitnahmenocken 22 in dazupassende Ausnehmungen 23 des zugeordneten Kupplungskörpers 14, 15 eingreift. Die Mitnahmenocken 22 können - wie in der Zeichnung dargestellt - in der konischen Fläche des Reibringes 20, 21 geradlinig vorragen, sie können aber auch abgebogen sein, z.B. annähernd rechtwinkelig nach außen, wobei dann der umgebogene Abschnitt in die zugehörigen Ausnehmungen der Kupplungskörper 14, 15 eingreift. An jeder konischen Außen- und Innenfläche sind die Reibringe 20, 21 mit einem beispielsweise aufgesinterten Reibbelag 24 versehen, der mit entsprechenden konischen Reib- bzw. Kupplungsflächen 25, 26 des Außensynchronringes 7, 8 bzw. eines zusätzlichen Innensynchronringes 27 zusammenwirkt.

Die Außensynchronringe 7, 8 sind - wie insbesonders aus Fig. 2 und 3 ersichtlich - als tiefgezogene Blechteile ausgebildet, die an ihrem Außenumfang die bereits erwähnte Außenverzahnung 18 bzw. 19 entsprechend der Sperrverzahnung der Schiebemuffe 4 bzw. der Außenverzahnung 16, 17 der Kupplungskörper 14, 15 tragen. Im mittleren Bereich ist die konische Reibfläche bzw. Kupplungsfläche 25, 26 vorgesehen. Am Innenumfang sind im Bereich des tiefgezogenen Bodens 28 zur formschlüssigen, drehfesten Verbindung mit dem Synchronkörper 3 ausgestanzte Mitnahmenocken 29 vorgesehen, die in Ausnehmungen 30 des Synchronkörpers 3 eingreifen.

Die Ausnehmungen 30 des aus den Fig. 4 und 5 näher ersichtlichen Synchronkörpers 3 sind von sich in achsparalleler Richtung erstreckenden Umfangsnuten an der nach außen gerichteten Fläche 31 einer seitlichen Ausdrehung 32 des scheibenförmigen Synchronkörpers 3 gebildet, wobei diese Ausdrehung im zusammengebauten Zustand der Anordnung jeweils zumindest Teile von Reibring 20 bzw. 21 und Außensynchronring 7 bzw. 8 aufnimmt.

Die Mitnahmenocken 29 sowie auch die aus Fig. 2 ersichtlichen kürzeren Kopplungsnocken 33 der Außensynchronringe 7, 8 greifen - wie aus Fig. 1 ersichtlich ist - formschlüssig in entsprechende Ausnehmungen der Innensynchronringe 27 ein, welche damit über die Außensynchronringe 7, 8 ebenfalls mit dem Synchronkörper 3 gekoppelt sind, was eine vorteilhafte, sogenannte Doppelsynchronisierung ergibt.

Im Betrieb der in Fig. 1 dargestellten Anordnung dreht sich der Synchronkörper 3 mit der Getriebewelle 1 mit, wogegen sich die beiden Gangräder 10, 11 relativ zur Getriebewelle 1 und zum Synchronkörper 3 frei drehen können. Wenn die Schiebemuffe 4 unter Überwindung der aus dem Bolzen 5 und der Feder 6 gebildeten Sperre gegen eines der Gangräder 10, 11 verschoben wird, z.B. gegen das Gangrad 11, so nimmt sie den Außensynchronring 7 über einen Schiebering 34 mit, der nach kurzer Verschiebung mit seiner Kupplungsfläche 25 auf die mit dem Reibbelag 24 versehene Reibfläche des Reibringes 21 auftrifft. Dadurch wird der Reibring 21 auch etwas in der Darstellung nach rechts verschoben, sodaß auch der gegenüberliegende Reibbelag 24 auf der Innenseite des Reibringes 21 mit dem Innensynchronring 27 in reibschlüssigen Kontakt kommt. Es kommt damit zu einer Anpassung der Drehzahl der beiden Synchronringe 7, 27 bzw. des damit über die Mitnahmenocken 29 gekoppelten Synchronkörpers 3 und des Gangrades 13, also zu einer Synchronisierung. Sobald die Drehzahlen übereinstimmen kann die Schiebemuffe 4 in die Außenverzahnung 17 des Kupplungskörpers 15 eingreifen und somit eine endgültige formschlüssige drehfeste Verbindung zwischen Getriebewelle 1 und Gangrad 11 herstellen.

Die entsprechende Verbindung zum in der Darstellung linken Gangrad 10 erfolgt analog durch Verschieben der Schiebemuffe 4 nach links.

Die im Bereich des tiefgezogenen Bodens 28 des zur Herstellung des Außensynchronringes 7 bzw. 8 verformten Blechteils ausgestanzten Mitnahmenocken 29 weisen einerseits hohe mechanische Steifigkeit und andererseits auch nach dem Umformen die erforderliche Genauigkeit der Anordnung und Dimensionierung auf, womit mit einfachen und kostengünstigen Mitteln bei der Herstellung der Außensynchronringe 7, 8 das Auslangen gefunden werden kann. Damit kann dieser wesentliche Bauteil der Synchronisierungseinrichtung gegenüber bisher bekannten derartigen Außensynchronringen wesentlich billiger und damit auch weitgehender einsetzbar hergestellt werden.

Abgesehen von der beschriebenen Ausbildung der Außensynchronringe 7 bzw. 8 als einfache tiefgezogene Formteile könnte im Bereich der Kupplungsfläche 25 auch noch zusätzlich ein Reibbelag vorgesehen sein, was auch für die Kupplungsfläche 26 am Außenumfang des Innensynchronringes 27 gilt, womit die Einsatzmöglichkeiten weiter erhöht sind. Dieser Reibbelag könnte in an sich bekannter Weise entweder vor der endgültigen Umformung des jeweiligen Synchronringes oder aber nachher aufgebracht werden, wozu bekannte Techniken verwendet werden können.

Die in Fig. 6 in ähnlicher Weise wie Fig. 1 dargestellte Synchronisierungseinrichtung ist im wesentlichen gleich bzw. sehr ähnlich wie die in Fig. 1 dargestellte ausgeführt. Gleiche bzw. von der Funktion her gleiche Bauteile sind deshalb auch mit gleichen Bezugszeichen versehen. Bezüglich des Aufbaus und der Funktion der Synchronisierungseinrichtung nach Fig. 6 wird zur Vermeidung von Wiederholungen auch auf die obigen Ausführungen zu Fig. 1 bzw. auch zu den Fig. 2 - 5 verwiesen.

Als einzigen wesentlichen Unterschied weist die Synchronisierungseinrichtung nach Fig. 6 nun anstelle der aus Bolzen 5 und Feder 6 gebildeten Federsperre und des Schieberinges 34 eine Ringfeder 35 auf, die die Funktion der beschriebenen Bauteile aus Fig. 1 gemeinsam übernimmt. Bei Verschiebung der Schiebemuffe 4 nach rechts (der Übersichtlichkeit halber ist die für die Verschiebung nach links erforderliche Ringfeder nicht dargestellt) wird nun der Außensynchronring 7 über den nach innen gezogenen Rand 36 der Ringfeder 35 nach rechts mitgenommen, womit sich ähnlich wie oben zu Fig. 1 beschrieben die Einleitung der Synchronisierung über den Reibring 21 ergibt, die schließlich nach Angleich der Drehzahlen zur formschlüssigen Koppelung zwischen Getriebewelle und dem in der Darstellung rechten Gangrad 11 ergibt.

## Patentansprüche

1. Synchronisierungseinrichtung für Schaltgetriebe, mit einem auf einer Getriebewelle (1) drehfest angeordneten, im wesentlichen scheibenförmigen Synchronkörper (3), der auf seinem Außenumfang eine Sehiebemuffe (4) trägt, und wenigstens einem auf der Getriebewelle (1) drehbar gelagerten Gangrad (10, 11), welches über einen verbundenen Kupplungskörper (14, 15) mittels der Schiebemuffe (4) mit dem Synchronkörper (3) drehfest zusammenschaltbar ist, wobei der Kupplungskörper (14, 15) über einen damit formschlüssig in Verbindung stehenden, mit zumindest einer konischen Reibfläche versehenen Reibring (20, 21) und einen bei Betätigung der Schiebemuffe (4) ein- und ausrückbaren, formschlüssig mit dem Synchronkörper (3) in Verbindung stehenden Außensynchronring (7, 8) reibschlüssig mit dem Synchronkörper (3) verbindbar ist, und wobei der Außensynchronring (7, 8) an seinem Außenumfang entsprechend der Sperrverzahnung von Schiebemuffe bzw. Kupplungskörper verzahnt ist und daran anschließend eine konische Reibfläche aufweist, **dadurch gekennzeichnet,** daß der Außensynchronring (7, 8) als tiefgezogener Blechteil ausgebildet ist, der an seinem Innenumfang im Bereich des tiefgezogenen Bodens (28) zur formschlüssigen, drehfesten Verbindung mit dem Synchronkörper (3) ausgestanzte Mitnahmenocken (29) aufweist, die in Ausnehmungen (30) des Synchronkörpers (3) eingreifen.

2. Synchronisierungseinrichtung nach Anspruch 1, dadurch gekennzeichnet, daß die Ausnehmungen (30) des Synchronkörpers (3) von sich in achsparalleler Richtung erstreckenden Umfangsnuten an der nach außen gerichteten Fläche (31) einer seitlichen Ausdrehung (32) des scheibenförmigen Synchronkörpers (3) gebildet sind, welche zumindest Teile von Reibring (20, 21) und Außensynchronring (7, 8) aufnimmt.

3. Synchronisierungseinrichtung nach Anspruch 1 oder 2 mit einem zusätzlichen, mit der Innenseite des konischen Reibrings zusammenwirkenden Innensynchronring zur Doppelsynchronisierung, dadurch gekennzeichnet, daß die Mitnahmenocken (29, 33) formschlüssig in Ausnehmungen des Innensynchronrings (27) eingreifen, welcher damit über den Außensynchronring (7, 8) mit dem Synchronkörper (3) gekoppelt ist.

4. Synchronisierungseinrichtung nach einem oder mehreren der Ansprüche 1 bis 3, dadurch gekennzeichnet, daß der Außensynchronring (7, 8) und/oder der Innensynchronring (27) an seiner mit dem Reibring (20, 21) zusammenwirkenden Seite einen Reibbelag aufweist.

## Claims

1. A synchronizing device for gearboxes, with a substantially disc-shaped synchronizer body (3) which is arranged rotationally fixed on a gearbox shaft (1) and which carries a sliding sleeve (4) on its external periphery, and at least one gearwheel (10, 11) which is mounted rotatably on the gearbox shaft (1) and which can be interlocked with the synchronizer body (3) in a rotationally fixed manner by means of the sliding sleeve (4) by way of a connected coupling member (14, 15), wherein the coupling member (14, 15) can be connected to the synchronizer body (3) in a non-positively locking manner by way of a friction ring (20, 21) connected to the said coupling member (14, 15) with positive locking and provided with at least one conical friction face and by way of an external synchronizer ring (7, 8) connected to the synchronizer body (3) with positive locking and engageable and disengageable when the sliding sleeve (4) is actuated, and wherein the external synchronizer ring (7, 8) is toothed on its external periphery in accordance with the locking teeth of the sliding sleeve and the coupling member respectively and has a conical friction face adjacent thereto, **characterized in that** the external synchronizer ring (7, 8) is constructed in the form of a deep-drawn sheet-metal part which is provided in the region of the deep-drawn base (28) on its internal periphery with stamped-out entrainment cams (29) for connexion to the synchronizer body (3) with positive locking in a rotationally fixed manner which engage in recesses (30) in the synchronizer body (3).

2. A synchronizing device according to Claim 1, **characterized in that** the recesses (30) in the synchronizer body (3) are formed by peripheral grooves extending in an axially parallel direction on the outwardly directed face (31) of a lateral bore (32) in the disc-shaped synchronizer body (3), which [lateral bore] receives at least parts of the friction ring (20, 21) and the external synchronizer ring (7, 8).

3. A synchronizing device according to Claim 1 or 2 with an additional internal synchronizer ring cooperating with the inside of the conical friction ring for double synchronization, **characterized in that** the entrainment cams (29, 33) engage with positive locking in recesses in the internal synchronizer ring (27) which is thus coupled to the synchronizer body (3) by way of the external synchronizer ring (7, 8).

4. A synchronizing device according to one or more of Claims 1 to 3, **characterized in that** the external synchronizer ring (7, 8) and/or the internal synchronizer ring (27) is provided with a friction lining on its side cooperating with the friction ring (20, 21).

## Revendications

1. Dispositif de synchronisation pour boîte de vitesses, comprenant un corps de synchronisation (3) agencé solidairement en rotation sur l'arbre de la boîte (1), sensiblement en forme de disque, et portant sur sa périphérie extérieure un manchon coulissant (4), et au moins un pignon de rapport de vitesse (10, 11) monté en rotation sur l'arbre de boîte (1) et susceptible d'être amené solidairement en rotation avec le corps de synchronisation (3) via un corps d'accouplement (14, 15) raccordé, et au moyen du manchon coulissant (4), ledit corps d'accouplement (14, 15) est susceptible d'être relié par coopération de friction avec le corps de synchronisation (3) par l'intermédiaire d'une bague de friction (20, 21) reliée par coopération de formes avec le corps d'accouplement et pourvue d'au moins une surface de friction conique, et d'une bague de synchronisation extérieure (7, 8) en liaison par coopération de formes avec le corps de synchronisation (3) et susceptible d'être engagée et dégagée par actionnement du manchon coulissant (4), et dans lequel la bague de synchronisation extérieure (7, 8) est dentée sur sa périphérie extérieure en correspondance de la denture de blocage du manchon coulissant, ou respectivement du corps d'accouplement, et présente à la suite une surface de friction conique,
caractérisé en ce que la bague de synchronisation extérieure (7, 8) est réalisée sous la forme d'une pièce en tôle emboutie, qui présente au niveau de sa périphérie intérieure et dans la région du fond (28) de la forme emboutie, des cames d'entraînement (29) poinçonnées et destinées à la liaison solidaire en rotation et par coopération de formes avec le corps de synchronisation (3), lesdites cames s'engageant dans des évidements (30) du corps de synchronisation (3).

2. Dispositif de synchronisation selon la revendication 1, caractérisé en ce que les évidements (30) du corps de synchronisation (3) sont formés par des gorges périphériques, qui s'étendent en direction parallèle à l'axe, au niveau de la surface (31) tournée vers l'extérieur d'une collerette latérale (31) du corps de synchronisation en forme de disque (3), laquelle reçoit des parties au moins de la bague de friction (20, 21) et de la bague de synchronisation extérieure (7, 8).

3. Dispositif de synchronisation selon l'une ou l'autre des revendications 1 et 2, comprenant une bague de synchronisation intérieure additionnelle, qui coopère avec la face intérieure de la bague de friction conique, en vue d'assurer une double synchronisation,
caractérisé en ce que les cames d'entraînement (29, 33) s'engagent par coopération de formes dans des évidements de la bague de synchronisation intérieure (27), laquelle est ainsi accouplée avec le corps de synchronisation (3) via la bague de synchronisation extérieure (7, 8).

4. Dispositif de synchronisation selon l'une ou plusieurs des revendications 1 à 3, caractérisé en ce que la bague de synchronisation extérieure (7, 8) et/ou la bague de synchronisation intérieure (27) comporte une garniture de friction sur son côté qui coopère avec la bague de friction (20, 21).
